Europäisches Patentamt

European Patent Office

Office européen des brevets

(11) Publication number: **0 356 656**
**A1**

## EUROPEAN PATENT APPLICATION

(21) Application number: **89112188.1**

(22) Date of filing: **04.07.89**

(51) Int. Cl.5: **A01M 1/14 , A01M 1/02**

(30) Priority: **30.08.88 CS 5844/88**
**30.08.88 CS 5845/88**
**30.08.88 CS 5846/88**

(43) Date of publication of application:
**07.03.90 Bulletin 90/10**

(84) Designated Contracting States:
**DE FR GB IT**

(71) Applicant: **SLOVENSKA AKADEMIA VIED**
**Obráncov mieru 49**
**Bratislava(CS)**

(72) Inventor: **Gabel, Bruno**
**Malinovského ul. 84**
**811 05 Bratislava(CS)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) Insect trap.

(57) The invention relates to a trap for capturing harmful insects in agriculture, forestry and large food-stuff store-rooms. The trap is composed of a lower dish (1) and an upper dish (2) being arranged concentrically and in parallel to each other by means of at least one removable joint (3), both dishes (1, 2) having slanting walls, and an exchangeable plate (4) for applying a substance for immobilization of allured insects placed on or in the lower dish (1).

FIG.1

EP 0 356 656 A1

## Insect trap

The invention relates to a trap for capturing harmful insects.

Traps provided with attractants of various chemical composition are being used for monitoring the occurence of harmful insect kinds in forestry and agriculture. As it follows from a number of published reports (e.g. LEWIS, T., MACAULAY, E.D.M.: Design and Elevation of Sex-attractant Traps for Pea Moth, Ecol. Ent. 1 (1976) 175-187; ELKINTON, J.S., CARDE, R.T.: The use of Pheromone Traps for Monitor Distribution and Population Trends of the Gypsy Moth, in MITCHELL, E.R. (ed.): Management of Insect Pests with Semiochemicals, Concepts and Practice, Plenum Press New York and London 1981, pp. 513), the shape of trap is one of the important factors that contributes to a significant degree to its catch efficiency. The choice of a suitable trap type for a concrete insect and biocoenosis is therefore the prerequisite for successful monitoring the population dynamics of agriculturally important insect pests.

The trap shape ought to respect the ethology of the insect pests as it flies into the trap (GABEL, B., STOCKEL, J.: Studies on the Flight Behaviour of the European Vine Moth, Lobesia botrana Den. et Schiff. (Lep., Tortricidae), J. Appl. Ent. 105 (1988) 205-211) and the conditions for air flow in the plant growth of the biocoenosis, and its colour should promote an attractive effect of the smelling substance issuing from the trap. There are known traps with triangular section, and traps with an opening in the sidewall (FR-A-76 15348) as well as traps formed by two bent, mutually interconnected plates (DE-A-2741 990, CS-A-239 144, GB-A-1 335 029, US-A-3 755 958), traps formed by two hemielliptical, mutually connected plates (DE-A-2741 990), traps formed by impact walls and traps with a sieve and an attractant (CS-A-244 959, DE-A-2924 629). The most complicated type of traps is that of US-A-4 694 604, which is formed by two housings connected together, a tray of a sticky insecticide or a collecting bag and three annular vanes.

The main disadvantage of hitherto known types of traps is the fact that the space through which allured insects penetrate into the trap is strictly determined by the respective technical realization which allows only a limited use of traps in various biocoenosis with respect to their catch action. The variability of the entry space is ensured for some types of paper traps which can be formed into various shapes on the basis of flaps to push through. Nevertheless, in this case further disadvantages of many existing types of paper traps are to be considered, namely the insufficient durability, which is usually one vegetation season, and the unpractical access to the part where allured individuals are immobilized. Therefore the control of the number of individuals caught is uncomfortable and lengthy whereby the efficiency of the field worker is reduced for a large number of traps. The traps are usually being produced in one colour which also limits their use for the capture of various kinds of insect pests with regard to the preferred spectrum of their colour vision.

It is the object of the present invention to provide an insect trap having an improved catch efficiency, high durability and easy access to immobilized insects.

The above object is achieved according to the claims. The dependent claims relate to preferred embodiments.

The insect trap according to the present invention is particularly designed for capturing harmful insects and is of omnidirectional type. The trap is composed of a lower dish and an upper dish which are connected to each other in a concentric and parallel position by means of at least one detachable or removable joint, both dishes having slanting walls. An exchangeable plate for carrying a substance for immobilization of allured insects is placed at the lower dish or in the lower dish.

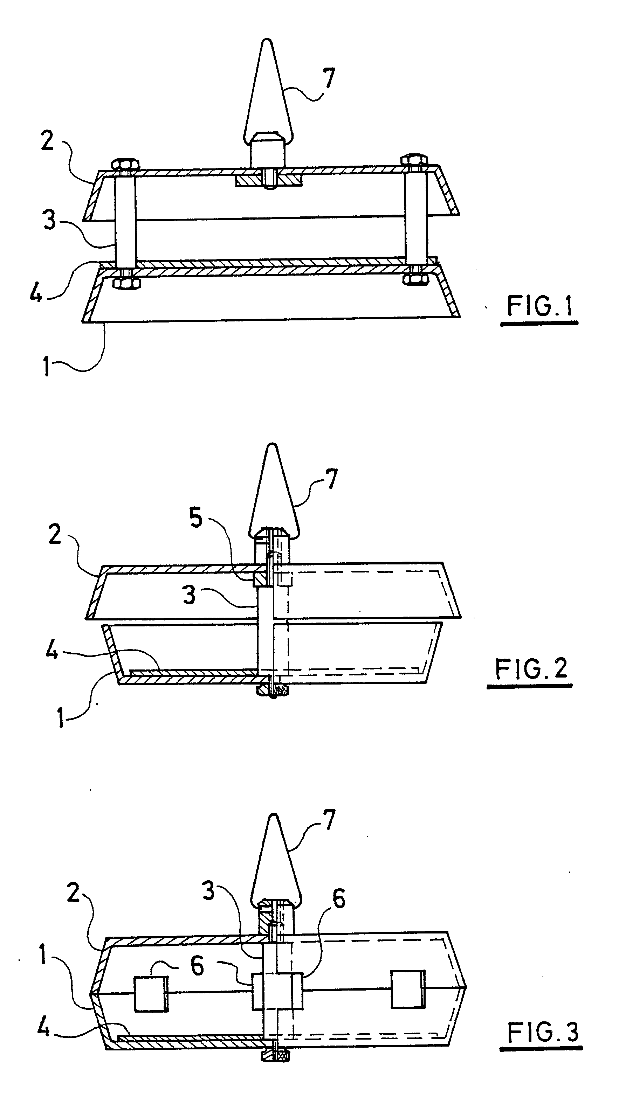

According to a preferred embodiment which can be utilized in agriculture and particularly in vineyards and which is shown in Fig. 1, both the lower dish 1 and the upper dish 2 are arranged in parallel and concentrically to each other upside down. The dishes have slanting side walls. The distance between the border of the upper dish 2 and the bottom of the lower dish 1 is 5 to 70 mm. The removable joint 3 is formed by two stay bolt screws of equal length which can be easily released. The exchangeable plate 4 for applying the substance for the immobilization of allured insects is placed between the stay bolt screws. Changing the plate under field conditions is easy and fast. The upper dish 2 is provided with a centrically arranged bow 7 for hanging which also serves as a grip.

The efficiency of this trap has been tested for example for the capture of the European grapevine moth, Lobesia botrana in vineyards, in comparison with known, commercially available insect traps.

The experiments were carried out in 1986 and 1987. The obtained results are summarized in Table 1.

2

Table 1

| Capture of European grapevine moths, Lobesia botrana, in pheromon traps of various types | | | |
|---|---|---|---|
| Trap | Pheromon employed | Glue employed | Average catch efficiency (%) |
| Trap according to the invention | Zoecon | Bird | 156.4 |
| Comparison trap 1 | Corp. | Tanglefoot | 100.0 |
| Trap according to the invention | Montedison | Bird | 162.4 |
| Comparison trap 2 | | Tanglefoot | 100.0 |
| Trap according to the invention | Zoecon | Bird | 159.3 |
| Comparison trap 3 | Corp. | Tanglefoot | 100.0 |
| Trap according to the invention | Montedison | Bird | 157.6 |
| Comparison trap 4 | | Tanglefoot | 100.0 |
| Comments: Traps 1 to 4 were known, commercially available traps: | | | |
| Trap 1 : Trap of triangular section with one opening in the sidewalls; | | | |
| Trap 2 : Trap composed of two paper plates bent to the shape of two joined triangles; | | | |
| Trap 3 : Trap composed of two paper plates bent to the shape of two hemiellipses and mutually interconnected: | | | |
| Trap 4 : Trap of triangular section without openings in the sidewalls. | | | |

The results presented in Table 1 show that the catch efficiency of the traps according to the invention is higher as compared with the prior art traps. After inspecting the deposit of moths it has been found that the slanting of the sidewalls of both dishes is advantageous. The catching trap areas which are represented by the slanting sidewalls of both dishes make it easier for the moth to penetrate into the inner space with the glue plate and thus contribute to enhance the catch efficiency of the trap. A proper angle of slanting is 10 to 65 degrees.

Another advantageous embodiment of the trap according to the present invention is shown in Fig. 2. The lower dish 1 and the upper dish 2 are arranged such that the inner sides of the dishes 1, 2 are facing each other, the lower dish 1 having a smaller diameter than the upper dish 2. The dishes have slanting side walls and are again arranged in parallel and concentrically. In same cases it may be advantageous to make the lower dish 1 deeper than the upper dish 2. The distance between the upper border of the sidewall of the lower dish 1 and the bottom of the upper dish 2 is from 5 mm up to double the sidewall height of the upper dish 2. The distance between the upper border of the lower dish sidewall and the inner side of the upper dish sidewall is at least 5 mm. The removable joint 3 is formed by at least one stay bolt screw provided preferably with at least one spacer 5 which enables to adjust the passage between the lower and upper dishes with respect to the size of the caught insect. The variability in the size of the inlet space allows employment of the trap in various types of biocoenoses while keeping a high catch efficiency. The relatively closed and protected inner space of the trap allows to employ a contact insecticide as well as a non-drying glue as an immobilizing agent. The trap is provided with a bow 7 preferably arranged centrically and at a central removable joint 3. The exchangeable plate 4 is located on the inner bottom surface of the lower dish 1. The manipulation with this trap at its exposition and control under field conditions are easy, fast and clean.

The catch efficiency of this trap has been tested for example in peach orchards for capture of Oriental fruit moth, Cydia molesta, in comparison with prior art traps. The experiments were carried out in 1987 and 1988. The obtained results are summarized in Table 2.

EP 0 356 656 A1

Table 2

| Capture of Oriental fruit moths, Cydia molesta, in pheromon traps of various types | | | |
|---|---|---|---|
| Trap | Pheromon employed | Glue employed | Average catch efficiency (%) |
| Trap according to the invention | Montedison | Bird | 142.3 |
| Comparison trap 1 | | Tanglefoot | 100.0 |
| Trap according to the invention | Montedison | Bird | 164.2 |
| Comparison trap 4[*] | | Tanglefoot | 100.0 |

[*] comparison traps same as in Table 1.

In another constructional embodiment shown in Fig. 3 the lower dish 1 and the upper dish 2 which are disposed in parallel and concentrically to each other, are arranged as in Fig. 2, i.e. with their inner bottom surfaces facing each other. At least one opening 6 is provided in the slanting sidewall of each dish, or at least two such openings 6 are provided in the sidewall of anyone of the dishes which enable the allured insects to come into the inner space of the trap. The borders of the sidewalls of both dishes are either in contact at the edges, or the border of the upper dish sidewall overlaps the border of the lower dish sidewall from outside. The removable joint 3 is formed again by at least one stay bolt screw, preferably arranged centrically, and provided with a bow 7. The exchangeable plate 4 is located on the bottom of the lower dish 1. An advantageous variability in number and size of the inlet openings 6 for the insects is achieved by providing up to three symmetrically formed openings 6 in the sidewalls of both dishes. The trap can therefore be employed in various biocoenoses, for example in forests and orchards, and the catch efficiency is high.

In the bottom of the lower dish 1 can be advantageously provided a small hole in an excentric position in order to eliminate gathering of rain water at the bottom of the lower dish 1, which could possibly penetrate through the inlet openings 6. In same cases, it can be advantageous to use a lower dish 1 which is deeper than the upper dish 3.

The catch efficiency of this trap has been tested for example in apple-tree orchards for capture of Codling moth, Cydia pomonella in comparison with the same prior art traps as in Table 2. The experiments were carried out in 1987 and 1988.

The obtained results are summarized in Table 3.

Table 3

| Capture of Codling moths, Cydia pomonella, in pheromon traps of various types | | | |
|---|---|---|---|
| Trap | Pheromon employed | Glue employed | Average catch efficiency (%) |
| Trap according to the invention | Montedison | Bird | 153.6 |
| Comparison trap 1 | | Tanglefoot | 100.0 |
| Trap according to the invention | Montedison | Bird | 183.4 |
| Comparison trap 4 | | Tanglefoot | 100.0 |

As mentioned above, the traps can have the upper dish 2 provided with a grip for hanging.

It is advantageous to make the traps of a synthetic, preferably plastic material, particularly of tough polystyrene which is not deformed under natural conditions even after many years of employment.

Coloured versions of traps can be chosen specifically for single kinds of pests with respect to the preferred spectrum of their colour vision. The traps can be of red, green, blue, yellow or white colour, or

4

they can be transparent. In order to speed up the work with the trap during control of the number of caught insects, especially for the variants shown in Figs. 2 and 3, it is advantageous to make the upper dish transparent and the lower dish coloured in a colour depending on the respective part of the spectrum preferred by the kind of pest to be caught. Preferred colours are red, green, blue, yellow, or white.

An attractant which allures the pest to be caught is placed on the attractant carrier provided in the lower part of the inner trap space and is released therefrom. Smelling substances having behavioral effect for insects can be employed as attractants. The allured individuals penetrate into the internal trap space through the inlet space between the lower dish 1 and the upper dish 2 wherein they come after a short flight into contact with the active material deposited on the exchangeable plate 4 which immobilizes the insects.

## Claims

1. Insect trap for capturing insects,
**characterized** in that
- it comprises a lower dish (1) and an upper dish (2) which are arranged in a concentric and parallel position to each other by means of at least one removable joint (3),
- the dishes (1, 2) have slanting side walls,
and
- at the lower dish (1) or in the lower dish (1) an exchangeable plate (4) is provided for application of a substance for immobilization of allured insects.

2. Trap according to Claim 1, characterized in that both dishes (1, 2) are arranged upside down.

3. Trap according to Claim 1 or 2, characterized in that the distance between the border of the upper dish (2) and the bottom of the lower dish (1) is 5 to 70 mm.

4. Trap according to one of Claims 1 to 3, characterized in that the removable joint (3) is formed by two stay bolt screws of equal length.

5. Trap according to Claim 1, characterized in that the inner bottom surfaces of both dishes (1, 2) are arranged to face each other.

6. Trap according to one of Claims 1 to 5, characterized in that the lower dish (1) is of smaller diameter than the upper dish (2).

7. Trap according to one of Claims 1 to 6, characterized in that the distance between the upper border of the sidewall of the lower dish (1) and the bottom of the upper dish (2) is from 5 mm up to twice the sidewall height of the upper dish (2).

8. Trap according to one of Claims 1 to 7, characterized in that the distance between the upper border of the lower dish (1) sidewall and the inner side of the upper dish (2) sidewall is at least 5 mm.

9. Trap according to one of Claims 1 to 8, characterized in that the removable joint (3) is formed by at least one stay bolt screw.

10. Trap according to one of claims 1 to 9, characterized in that the removable joint (3) is formed by at least one stay bolt screw provided with at least one spacer (5).

11. Trap according to one of Claims 1 to 10, characterized in that at least one opening (6) is provided in the sidewall of each dish (1, 2), or at least two openings (6) are provided in the sidewall of anyone of the dishes (1, 2).

12. Trap according to one of Claims 1 and 3 to 11, characterized in that the borders of the sidewalls of both dishes (1, 2) are in touch at their edges.

13. Trap according to one of Claims 1 and 3 to 12, characterized in that the border of the sidewall of the upper dish (2) overlaps from the outside the border of the sidewall of the lower dish (1).

14. Trap according to one of Claims 1 to 13, characterized in that the height of the sidewall of the lower dish (1) is higher than, or equal to the height of the sidewall of the upper dish (2).

15. Trap according to one of Claims 1 to 14, characterized in that the lower dish (1) and/or the upper dish (2) have slanting side walls.

16. Trap according to one of Claims 1 to 15, characterized in that the upper dish (2) is provided with a bow (7).

17. Trap according to one of Claims 1 to 16, characterized in that it is made partially or totally of a synthetic material, preferably a plastic/polymer material, which is transparent, opaque or colored.

18. Trap according to one of Claims 1 to 17, characterized in that it is made partially or totally of tough polystyrene.

FIG.1

FIG.2

FIG.3

| | European Patent Office | EUROPEAN SEARCH REPORT | Application Number |
|---|---|---|---|

EP    89 11 2188

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-U-8702524 (C.F.SPIESS & SOHN GMBH & CO.) <br> * page 2, line 7 - page 3, line 17; figures 1-2 * | 1, 3, 5-8, 13, 15, 17 | A01M1/14 <br> A01M1/02 |
| A | | 4, 9-10, 14, 16, 18 | |
| | --- | | |
| A | US-A-1723919 (J.BYKOWY) <br> * page 1, lines 10 - 19; figures 1-2, 4 * | 2-3, 14 | |
| | --- | | |
| A | GB-A-2023987 (A.ARRIGONI) <br> * abstract; figure 2 * | 1-2 | |
| | --- | | |
| D,A | US-A-4694604 (A.W.MITCHELL) <br> * column 4, lines 53 - 56; figure 1 * | 17 | |
| | --- | | |
| D,A | FR-A-2351595 (INSITUT NATIONAL DE LA RECHERCHE AGRONOMIQUE) <br> * page 2, lines 19 - 26; figure 4 * | 18 | |
| | ----- | | **TECHNICAL FIELDS SEARCHED (Int. Cl.5 )** <br><br> A01M |

The present search report has been drawn up for all claims

| Place of search | Date of completion of the search | Examiner |
|---|---|---|
| THE HAGUE | 27 NOVEMBER 1989 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)